# FASCICULE DE BREVET EUROPEEN

(11) **EP 3 671 030 B1**
(45) Date de publication et mention de la délivrance du brevet: **30.06.2021**
(21) Numéro de dépôt: 19217643.6
(22) Date de dépôt: 18.12.2019
(51) Int. Cl.: F21V 21/03, F21V 23/04, H02G 3/08, H02G 3/20

(54) **DISPOSITIF DE CONNEXION POUR UN LUMINAIRE**
VERBINDUNGSVORRICHTUNG FÜR EINEN BELEUCHTUNGSKÖRPER
CONNECTION DEVICE FOR A LUMINAIRE

(30) Priorité: 18.12.2018 FR 1873226
(43) Date de publication de la demande: 24.06.2020
(73) Titulaire: Schneider Electric Industries SAS, 92500 Rueil Malmaison (FR)
(72) Inventeur: PETTINOTTO, Gilles, 38050 GRENOBLE CEDEX 09 (FR); DALBE, Michel, 38050 GRENOBLE (FR); JONSSON, Michael, 38050 GRENOBLE (FR)
(74) Mandataire: Lavoix

(56) Documents cités:
- GB-A- 2 559 891
- US-A1- 2013 083 529
- US-A1- 2015 338 077
- US-A1- 2017 214 229
- US-A1- 2018 115 131

## Description

La présente invention concerne un dispositif de connexion pour un luminaire.

Les normes actuelles de construction de bâtiments imposent le montage dans les parois des pièces de locaux d'habitation ou tertiaires de dispositifs de connexion luminaires (DCL) comportant des prises de branchement de luminaires ne nécessitant pas de manipulation de fils électriques par des utilisateurs. Ces dispositifs DCL sont montés dans des boitiers d'encastrement montés eux-mêmes dans des murs ou des plafonds et ayant des dimensions prédéfinies. Les dispositifs DCL ont également des dimensions prédéfinies en fonction des boitiers dans lesquels ils sont installés, et ont un conduit central destiné à permettre l'insertion d'une vis d'accrochage de luminaire. Les dispositifs DCL sont formés par un boitier renfermant des composants électroniques et des organes de connexion.

Le besoin de dispositifs connectés, notamment contrôlables à distance au moyen de smartphones, implique que les dispositifs DCL doivent être reliés à des dispositifs de communication externe, notamment par télécommande utilisant des techniques de radio-fréquence (Bluetooth, etc.).

Actuellement, le contrôle à distance des luminaires peut être réalisé par des douilles ou ampoules connectées, c'est-à-dire équipées de boutons de commande et de système de communication. Des dispositifs de communication sont également montés dans l'espace libre du boitier d'encastrement. La plupart du temps, plusieurs minutes sont nécessaires à un électricien pour effectuer les raccordements filaires nécessaires pour chaque luminaire, ce qui implique un surcoût important.

US 2018/115131 décrit un dispositif de connexion d'appareil électriques, comprenant une zone de connexion à un réseau électrique et un boitier formant un volume intérieur dans lequel sont intégrés des organes d'alimentation électrique du luminaire et un système de contrôle et de communication.

C'est à ces inconvénients qu'entend remédier l'invention en proposant un nouveau dispositif de connexion pour luminaire, dont le montage et l'intégration de fonctions connectées sont grandement facilités.

A cet effet, l'invention concerne un dispositif de connexion pour un luminaire, comprenant un boitier destiné à être installé dans un espace de montage dans une paroi d'un local, ce dispositif comprenant une prise de connexion d'un luminaire et une zone de connexion à un réseau électrique. Le boitier forme un volume intérieur dans lequel sont intégrés des organes d'alimentation électrique du luminaire, des organes de connexion entre la prise de connexion du luminaire et la zone de connexion au réseau électrique et un système de contrôle et de communication avec un appareil extérieur au dispositif de connexion. Selon l'invention, le système de contrôle et de communication comprend une antenne de communication par radio-fréquence, le dispositif comporte une face avant solidaire du boitier et configurée pour faire saillie en dehors de l'espace de montage, l'antenne étant prévue dans une zone du dispositif localisée dans un volume délimité par la face avant, et la face avant présente une paroi munie d'une réduction d'épaisseur formant une cavité orientée d'un côté interne du boitier et dans laquelle est reçue l'antenne de communication

Grâce à l'invention, le boitier DCL renferme déjà tous les composants nécessaires pour réaliser des contrôles à distance. La facilité de montage est grandement améliorée, puisque l'intervention d'un électricien n'est plus nécessaire pour connecter les systèmes de communication.

Selon des aspects avantageux mais non obligatoires de l'invention, un tel dispositif de connexion pour luminaire peut incorporer une ou plusieurs des caractéristiques suivantes, prises selon toute combinaison techniquement admissible :
- Les organes d'alimentation électrique du luminaire sont prévus sur une première carte électronique montée dans le boitier, les organes de connexion entre la prise de connexion du luminaire et la zone de connexion au réseau électrique sont prévus sur une deuxième carte électronique montée dans le boitier, et le système de contrôle et de communication est prévu sur une troisième carte électronique montée dans le boitier.
- La première carte électronique est orientée parallèlement à un axe central du boitier, les deuxième et troisième cartes sont orientées perpendiculairement à l'axe central, la deuxième carte étant fixée sur un premier bord axial de la première carte, et la troisième carte étant fixée sur un second bord axial de la première carte opposé au premier bord axial selon l'axe central.
- Les cartes électroniques sont fixées par des organes d'encastrement et des soudures assurant la connexion électrique entre les cartes.
- Les deuxième et troisième cartes électroniques présentent un contour externe semi-circulaire centré sur l'axe central et délimité par une paroi interne du boitier, et un orifice central s'étendant autour d'un conduit central du boitier.

L'invention sera mieux comprise et d'autres avantages de celle-ci apparaîtront plus clairement à la lumière de la description qui va suivre d'un dispositif de connexion pour luminaire conforme à son principe, faite à titre d'exemple non limitatif et en référence aux dessins annexés dans lesquels :
[Fig 1] la figure 1 est une vue en perspective par une face avant d'un dispositif de connexion pour luminaire conforme à l'invention ;

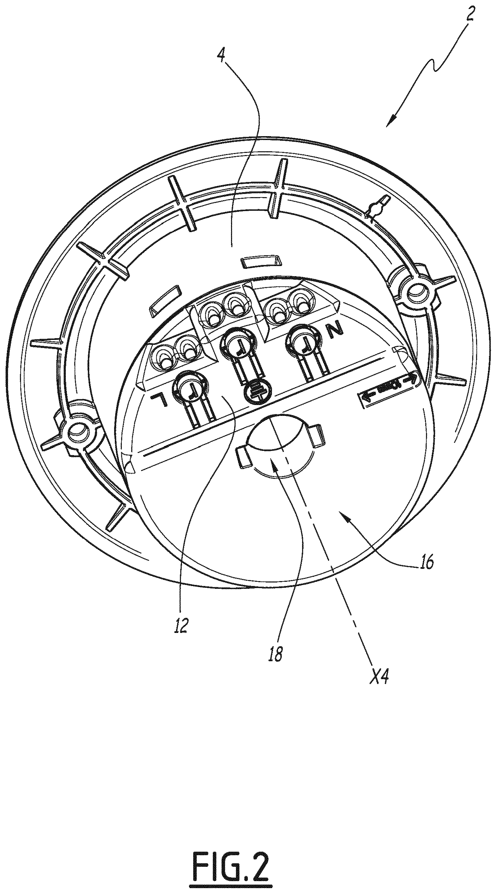

[Fig 2] la figure 2 est une vue en perspective par une face arrière du dispositif de connexion de la figure 1 ;

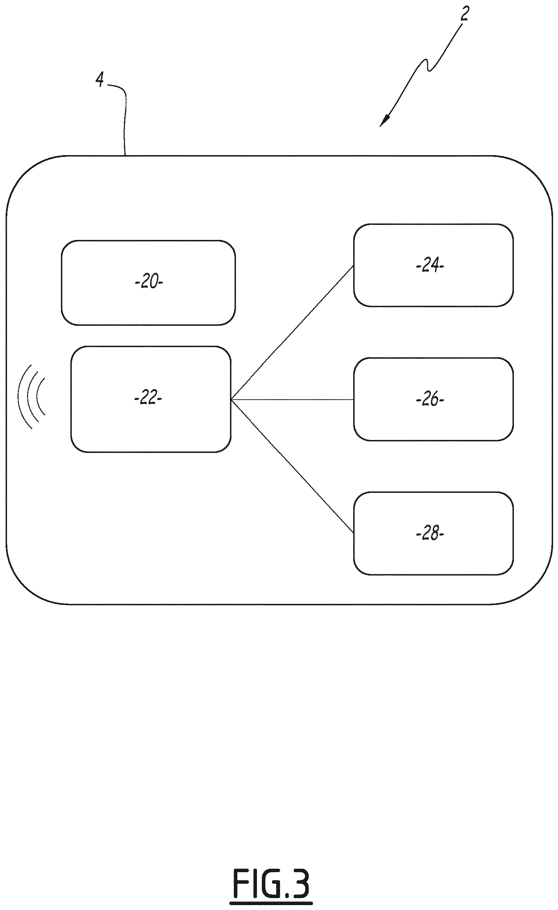

[Fig 3] la figure 3 est un schéma des composants et fonctions intégrés dans le dispositif de connexion de la figure 1 ;

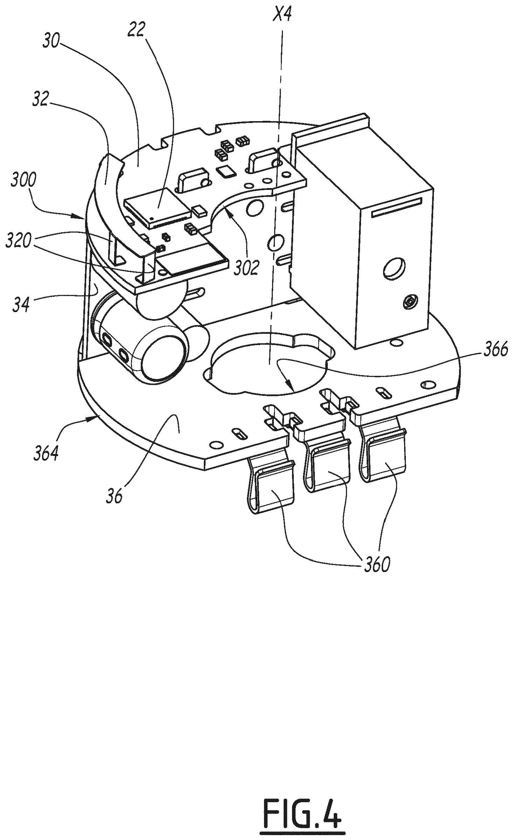

[Fig 4] la figure 4 est une vue en perspective du dispositif de connexion de la figure 1, dont le boitier est omis laissant visible des cartes électroniques ;
[Fig 5] la figure 5 est une coupe selon le plan V du dispositif de connexion de la figure 1;
[Fig 6] la figure 6 est une vue de dessus d'une carte électronique de contrôle et de communication du dispositif de connexion ;

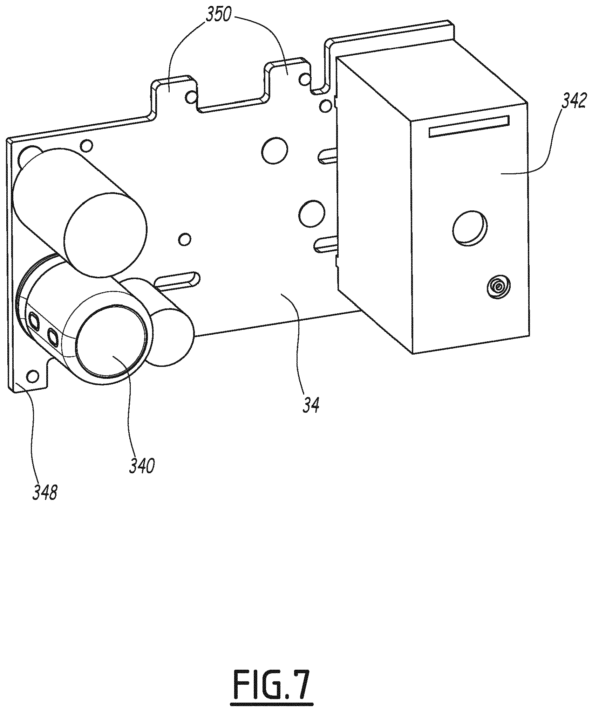

[Fig 7] la figure 7 est une vue de dessous et en perspective d'une carte électronique de puissance;

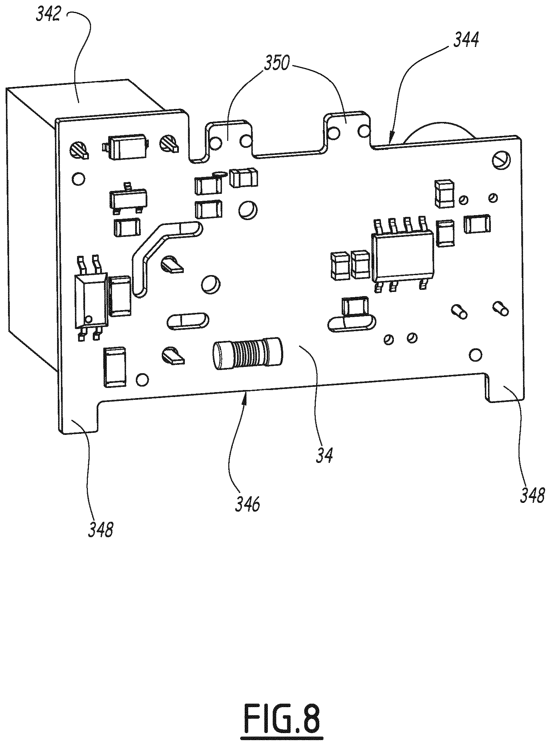

[Fig 8] la figure 8 est une vue de dessus et en perspective de la carte électronique de puissance de la figure 7 ;

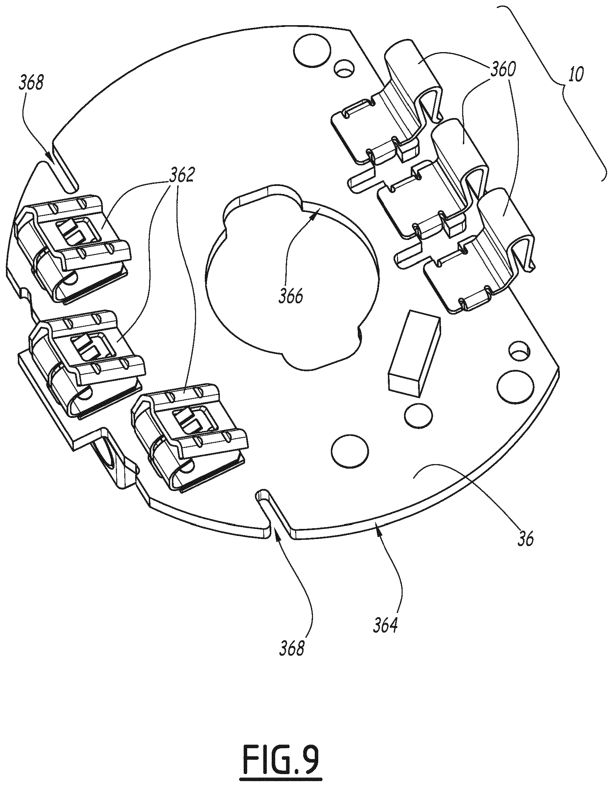

[Fig 9] la figure 9 est une vue en perspective d'une carte électronique de connexion du dispositif de connexion ;

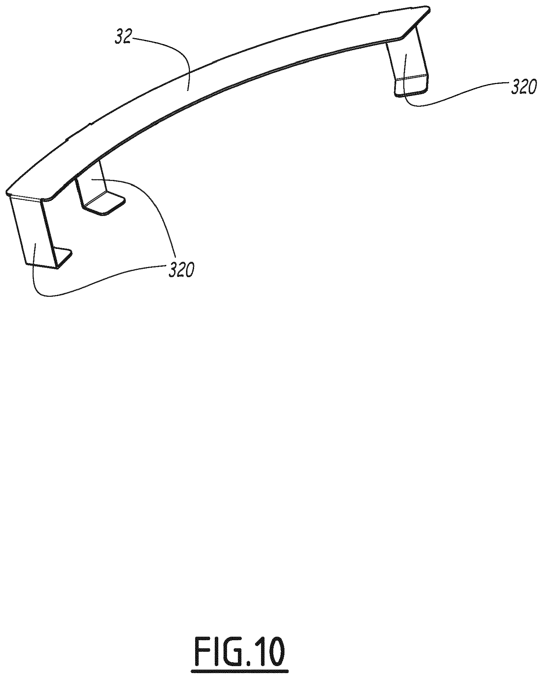

[Fig 10] la figure 10 est une vue en perspective d'une antenne de la carte de contrôle et de communication de la figure 6 ;
[Fig 11] la figure 11 est une coupe transversale du dispositif de connexion implanté dans une paroi et passant par l'antenne de la figure 10.

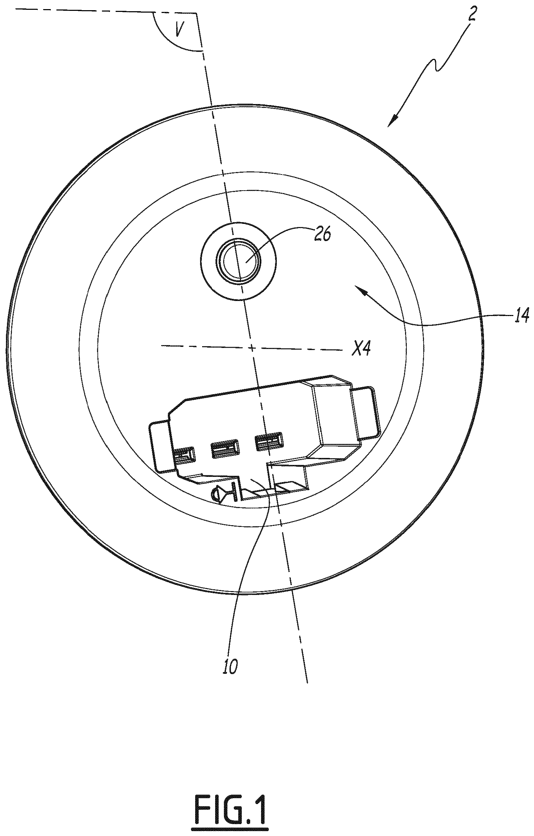

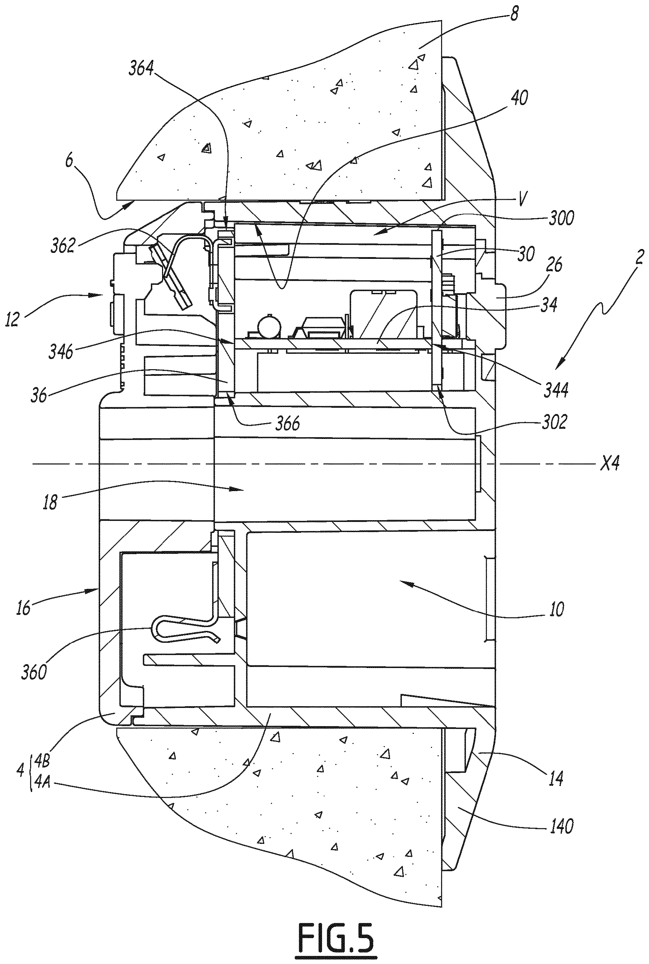

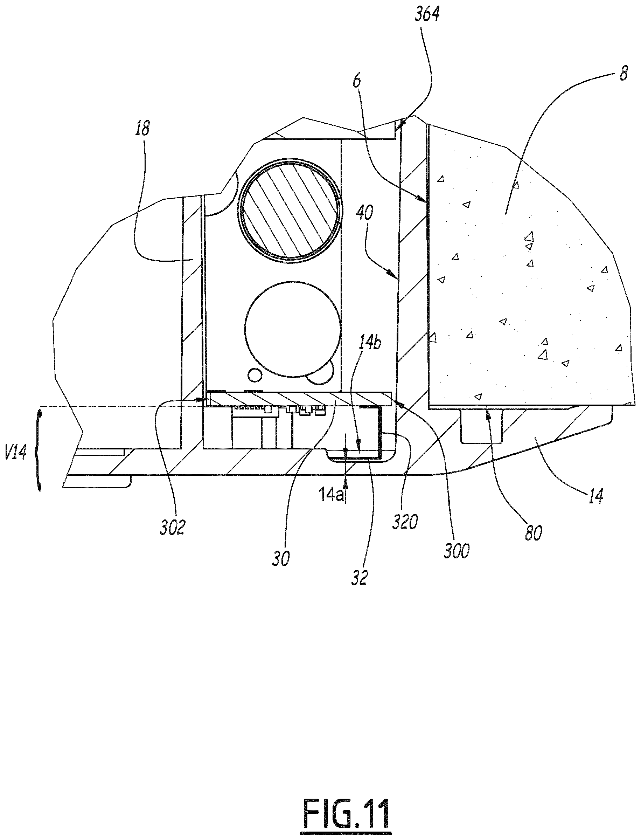

La figure 1 représente un dispositif de connexion 2 pour un luminaire non représenté, comprenant un boitier 4 destiné à être installé dans un espace de montage 6 visible aux figures 5 et 11, prévu dans une paroi 8 d'une pièce d'un local non représenté. Ce dispositif de connexion 2, couramment appelé « DCL » pour Dispositif de Connexion Luminaire, comprend une prise de connexion standardisée 10 du luminaire et une zone de connexion 12 à un réseau électrique. Le but de ce dispositif est de faciliter l'installation de luminaires pour l'occupant du local.

La prise de connexion 10 est située sur une face avant 14 du boitier 4, qui fait saillie en dehors de la paroi 8, et qui comprend un rebord 140 qui s'étend contre la paroi 8. La zone de connexion 12 est située sur une face arrière 16 du boitier 4 et localisée dans l'espace de montage 6.

Le boitier 4 présente une forme cylindrique à section circulaire centrée sur un axe central X4. L'axe central X4 est perpendiculaire à la paroi 8 dans laquelle est prévu l'espace de montage 6. Dans le cas représenté à la figure 5, la paroi 8 est verticale, le dispositif 2 étant monté dans un mur. En variante, la paroi 8 peut être horizontale, le dispositif 2 étant monté dans un plafond.

Le boitier 4 comprend un conduit central 18 centré sur l'axe central X4 et s'étendant sur l'ensemble de la longueur du boitier 4 selon l'axe central X4. Ce conduit central 18 est destiné à recevoir par vissage une tige terminée par un crochet permettant de suspendre un luminaire.

Le boitier 4 forme un volume intérieur V dans lequel sont intégrés des organes d'alimentation électrique du luminaire, des organes de connexion entre la prise de connexion 10 du luminaire et la zone de connexion 12 au réseau électrique, et un système de contrôle et de communication avec un appareil extérieur au dispositif de connexion 2. Ainsi, le dispositif 2 centralise, dans le même boitier 4, des fonctions d'adaptation et de régulation d'alimentation électrique 20, un microprocesseur 22 mettant en œuvre un logiciel de fonctionnement (« firmware ») et un module de communication, des diodes de couleurs 24 signalant des états de fonctionnement du dispositif, un bouton 26 de contrôle du dispositif 2 et de mise en œuvre de certaines fonctions, notamment l'appairage à un dispositif électronique externe, et un relais 28, 342 de mise sous tension du luminaire. Le dispositif de connexion 2 est alimenté en courant électrique de secteur via la zone de connexion 12. Les diodes 24, le bouton 26 et le relais 28, 342 sont connectés électriquement au microprocesseur 22.

La centralisation de toutes les fonctions dans un même boitier permet une grande facilité d'installation : le technicien d'installation dans un bâtiment en construction effectue simplement la connexion des fils électriques présents dans l'espace de montage 6 aux bornes correspondantes de la zone de connexion 12. Il n'y a pas besoin de connaissances particulières pour relier le système de contrôle et de communication aux autres composants, contrairement aux méthodes actuelles mettant en œuvre des dispositifs DCL et des systèmes de communication déportés.

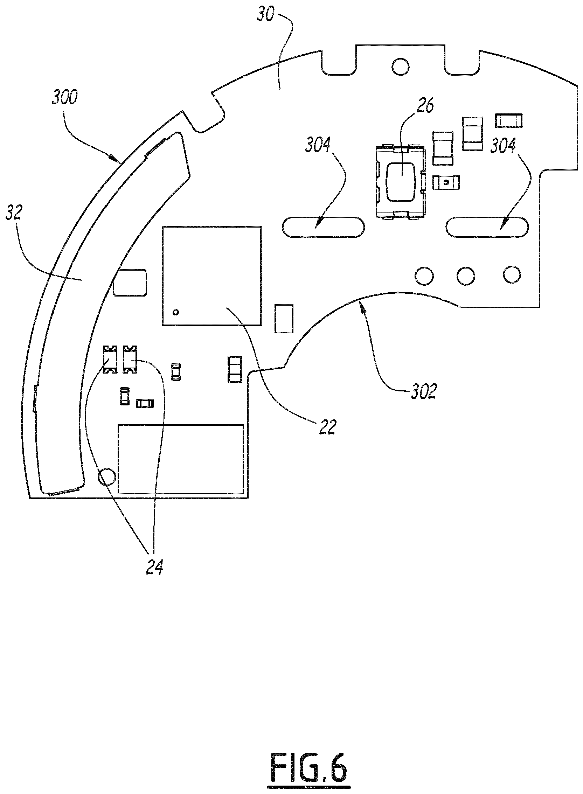

Le système de contrôle et de communication est prévu sur une carte électronique 30 visible à la figure 6 et montée dans le boitier 4. Cette carte 30 comprend notamment le microprocesseur 22, deux diodes 24 et le bouton poussoir 26.

Le système de contrôle et de communication comprend une antenne 32 de communication par radio-fréquence connectée sur la carte 30. Afin de permettre les émissions et réception d'ondes, par exemple de technologie Bluetooth ou Zigbee, l'antenne 32 doit se trouver à l'extérieur du volume de l'espace de montage 6 de manière que le matériau de la paroi 8, par exemple du béton, n'empêche pas la propagation des ondes. La face avant 14, solidaire du boitier 4 est donc configurée pour faire saillie en dehors de l'espace de montage 6, et l'antenne 32 est prévue dans une zone du dispositif 2 localisée dans un volume V14 délimité par la face avant 14. L'antenne 32 se trouve au-delà d'une face externe 80 de la paroi 8.

L'antenne 32 comporte des pieds 320 fixés sur la carte 30, et qui permettent une élévation de l'antenne 32 par rapport à la carte 30.

La face avant 14 présente une paroi munie d'une réduction d'épaisseur 14a formant une cavité 14b orientée d'un côté interne du boitier 4 et dans laquelle est reçue l'antenne de communication 32. Cette réduction d'épaisseur permet une amélioration de la réception et de l'émission d'ondes par l'antenne 32.

Les organes d'alimentation électrique du dispositif électronique et du luminaire sont prévus sur une carte électronique 34 montée dans le boitier 4. Ces organes sont configurés pour fournir et réguler l'alimentation en courant continu à partir de l'alimentation secteur en courant alternatif reçue par le dispositif 2. Sur cette carte 34 sont notamment implantés un condensateur de filtrage 340 et un relais 342.

Les organes de connexion entre la prise de connexion 10 du luminaire et la zone de connexion 12 au réseau électrique sont prévus sur une carte électronique 36 montée dans le boitier 4. Cette carte 36 comporte notamment trois bornes de connexion 360 (phase, neutre, masse) formant la prise de connexion 10 au luminaire, et trois bornes de connexion 362 (phase, neutre, masse) formant la zone de connexion 12 au réseau électrique.

La carte électronique 34 est orientée parallèlement à l'axe central X4, et les cartes 30 et 36 sont orientées perpendiculairement à l'axe central X4. La carte 30 est fixée sur un premier bord axial 344 de la carte 34, situé du côté de la face avant 14, et la carte 36 est fixée sur un second bord axial 346 de la carte 34, opposé au premier bord axial 344 selon l'axe central X4, c'est-à-dire du côté de la face arrière 16. Ainsi, les composants de contrôle et de communication, notamment le bouton 26 et l'antenne 32, se situent près de la face avant 14, de manière à faire saillie en dehors de la paroi 8, tandis que les bornes de connexion 362 sont en face arrière 16 de manière à pouvoir être reliées à des fils électriques présents dans l'espace de montage 6.

Les cartes électroniques 30 et 36 présentent un contour externe respectif 300 et 364 semi-circulaire centré sur l'axe central X4 et délimité par une paroi interne 40 du boitier 4, et un orifice central respectif 302 et 366 s'étendant autour du conduit central 18 du boitier 4.

Les cartes électroniques 30, 34 et 36 sont fixées les unes aux autres par des organes d'encastrement et des soudures assurant la connexion électrique entre les cartes. De façon détaillée, la carte 34 comporte deux pattes de fixation et de connexion 348 (phase et neutre) à la carte 36. Ces deux pattes 348 sont reçues dans deux orifices complémentaires 368 prévus sur la carte 36. Les pattes 348 sont munies de pistes conductrices non représentées, qui assurent le contact électrique avec des pistes conductrices non représentées prévues sur le pourtour des orifices 368. Des soudures non représentées assurent la tenue mécanique de l'assemblage des pattes 348 et des orifices 368 ainsi que la conduction électrique.

De façon similaire, la carte 34 comporte également deux pattes de fixation et de connexion 350 (phase et neutre), qui sont reçues dans deux orifices complémentaires 304 de la carte 30. Des pistes conductrices et des soudures non représentées assurent la tenue mécanique de l'assemblage des pattes 350 et des orifices 304 et la conduction électrique.

Les trois cartes 30, 34 et 36 ainsi fixées et connectées forment un ensemble solidaire lui-même fixé dans le boitier 4. Comme cela est visible à la figure 5, le boitier 4 peut comprendre deux pièces 4A et 4B assemblées. La pièce 4A est de forme cylindrique et porte la face avant 14. L'ensemble formé par les trois cartes 30, 34 et 36 est inséré dans la pièce 4A. La pièce 4B porte la face arrière 16 et vient fermer le volume intérieur V du boitier 4 et encapsuler les cartes 30, 34 et 36 dans le boitier 4.

## Revendications

1. Dispositif de connexion (2) pour un luminaire, comprenant un boitier (4) destiné à être installé dans un espace de montage (6) dans une paroi (8) d'un local, ce dispositif (2) comprenant une prise de connexion (10) d'un luminaire et une zone de connexion (12) à un réseau électrique, le boitier (4) formant un volume intérieur (V) dans lequel sont intégrés des organes d'alimentation électrique du luminaire, des organes de connexion entre la prise de connexion (10) du luminaire et la zone de connexion (12) au réseau électrique et un système de contrôle et de communication avec un appareil extérieur au dispositif de connexion (2), ce dispositif étant **caractérisé en ce que** le système de contrôle et de communication comprend une antenne de communication (32) par radio-fréquence, **en ce que** le dispositif (2) comporte une face avant (14) solidaire du boitier (4) et configurée pour faire saillie en dehors de l'espace de montage (6), l'antenne (32) étant prévue dans une zone du dispositif (2) localisée dans un volume (V14) délimité par la face avant (14), et **en ce que** la face avant (14) présente une paroi munie d'une réduction d'épaisseur (14a) formant une cavité (14b) orientée d'un côté interne du boitier (4) et dans laquelle est reçue l'antenne de communication (32).

2. Dispositif de connexion selon la revendication 1, **caractérisé en ce que** les organes d'alimentation électrique du luminaire sont prévus sur une première carte électronique (34) montée dans le boitier (4), **en ce que** les organes de connexion entre la prise de connexion (10) du luminaire et la zone de connexion (12) au réseau électrique sont prévus sur une deuxième carte électronique (36) montée dans le boitier (4), et **en ce que** le système de contrôle et de communication est prévu sur une troisième carte électronique (30) montée dans le boitier (4).

3. Dispositif de connexion selon la revendication 2, **caractérisé en ce que** la première carte électronique (34) est orientée parallèlement à un axe central (X4) du boitier (4), et **en ce que** les deuxième et troisième cartes (36, 30) sont orientées perpendiculairement à l'axe central (X4), la deuxième carte (36) étant fixée sur un premier bord axial (346) de la première carte (34), et la troisième carte (30) étant fixée sur un second bord axial (344) de la première carte (34) opposé au premier bord axial (346) selon l'axe central (X4).

4. Dispositif de connexion selon la revendication 3, **caractérisé en ce que** les cartes électroniques (30, 34, 36) sont fixées par des organes d'encastrement (348, 350, 368, 304) et des soudures assurant la connexion électrique entre les cartes.

5. Dispositif de connexion selon l'une des revendications 3 et 4, **caractérisé en ce que** les deuxième (36) et troisième (30) cartes électroniques présentent un contour externe semi-circulaire (364, 300) centré sur l'axe central (X4) et délimité par une paroi interne (40) du boitier (4), et un orifice central (366, 302) s'étendant autour d'un conduit central (18) du boitier (4).

## Patentansprüche

1. Anschlussvorrichtung (2) für eine Leuchte, mit einem Gehäuse (4), das vorgesehen ist, in einem Einbauraum (6) in einer Wand (8) eines Raumes installiert zu werden, wobei diese Vorrichtung (2) eine Anschlussbuchse (10) einer Leuchte und einen Bereich (12) für den Anschluss an ein elektrisches Netz umfasst, wobei das Gehäuse (4) ein Innenvolumen (V) bildet, in das elektrische Versorgungselemente der Leuchte, Verbindungselemente zwischen der Anschlussbuchse (10) der Leuchte und dem Bereich (12) für den Anschluss an das elektrische Netz und ein System zur Steuerung und Kommunikation mit einem Gerät außerhalb der Anschlussvorrichtung (2) integriert sind, wobei diese Vorrichtung **dadurch gekennzeichnet ist, dass** das Steuer- und Kommunikationssystem eine Hochfrequenz-Kommunikationsantenne (32) umfasst, dass die Vorrichtung (2) eine mit dem Gehäuse (4) fest verbundene Vorderseite (14) aufweist, die ausgebildet ist, aus dem Montageraum (6) herauszuragen, wobei die Antenne (32) in einem Bereich der Vorrichtung (2) vorgesehen ist, der sich in einem von der Vorderseite (14) begrenzten Volumen (V14) befindet, und dass die Vorderseite (14) eine mit einer Dickenverringerung (14a) versehene Wand aufweist, die einen Hohlraum (14b) bildet, der zu einer Innenseite des Gehäuses (4) hin ausgerichtet ist und in dem die Kommunikationsantenne (32) aufgenommen ist.

2. Anschlussvorrichtung nach Anspruch 1, **dadurch gekennzeichnet, dass** die elektrischen Versorgungselemente der Leuchte auf einer ersten, im Gehäuse (4) montierten Elektronikplatine (34) vorgesehen sind, dass die Verbindungselemente zwischen der Anschlussdose (10) der Leuchte und dem Bereich (12) für den Anschluss an das elektrische Netz auf einer zweiten, im Gehäuse (4) montierten Elektronikplatine (36) vorgesehen sind, und dass das Steuer- und Kommunikationssystem auf einer dritten, im Gehäuse (4) montierten Elektronikplatine (30) vorgesehen ist.

3. Anschlussvorrichtung nach Anspruch 2, **dadurch gekennzeichnet, dass** die erste Elektronikplatine (34) parallel zu einer Mittelachse (X4) des Gehäuses (4) ausgerichtet ist und dass die zweite und die dritte Platine (36, 30) senkrecht zur Mittelachse (X4) ausgerichtet sind, wobei die zweite Platine (36) an einem ersten axialen Rand (346) der ersten Platine (34) und die dritte Platine (30) an einem zweiten axialen Rand (344) der ersten Platine (34) entgegengesetzt zu dem ersten axialen Rand (346) entlang der Mittelachse (X4) befestigt ist.

4. Anschlussvorrichtung nach Anspruch 3, **dadurch gekennzeichnet, dass** die Elektronikplatinen (30, 34, 36) durch Einsteckelemente (348, 350, 368, 304) und Lötstellen, die die elektrische Verbindung zwischen den Karten sicherstellen, befestigt sind.

5. Anschlussvorrichtung nach einem der Ansprüche 3 und 4, **dadurch gekennzeichnet, dass** die zweite (36) und die dritte (30) Elektronikplatine eine halbkreisförmige Außenkontur (364, 300), die auf die Mittelachse (X4) zentriert und durch eine Innenwand (40) des Gehäuses (4) begrenzt ist, und eine zentrale Öffnung (366, 302), die sich um einen zentralen Kanal (18) des Gehäuses (4) herum erstreckt, aufweisen.

## Claims

1. A connection device (2) for a luminaire, comprising a housing (4) intended to be installed in a mounting space (6) in a wall (8) of a premises, this device (2) comprising a connection socket (10) of a luminaire and a connection zone (12) for connecting to an electrical network, the housing (4) forming an inner volume (V) inside which members for supplying the luminaire with electrical power, connection members between the connection socket (10) of the luminaire and the connection zone (12) for connecting to the electrical network and a system for control and communication with an apparatus outside the connection device (2) are integrated, this device being **characterized in that** the system for control and communication comprises a radiofrequency communication antenna (32), **in that** the device (2) includes a front face (14) which is secured to the housing (4) and configured to protrude outside the mounting space (6), the antenna (32) being provided in a zone of the device (2) located in a volume (V14) delimited by the front face (14), and **in that** the front face (14) has a wall provided with a reduced thickness (14a) forming a cavity (14b) oriented toward an inner side of the housing (4) and in which the communication antenna (32) is received.

2. The connection device according to claim 1, **characterized in that** the members for supplying the luminaire with electrical power are provided on a first electronic board (34) mounted in the housing (4), **in that** the connection members between the connection socket (10) of the luminaire and the connection zone (12) to the electrical network are provided on a second electronic board (36) mounted in the housing (4), and **in that** the system for control and communication is provided on a third electronic board (30) mounted in the housing (4).

3. The connection device according to claim 2, **characterized in that** the first electronic board (34) is oriented parallel to a central axis (X4) of the housing (4), and **in that** the second and third boards (36, 30) are oriented perpendicularly to the central axis (X4), the second board (36) being fastened on a first axial edge (346) of the first board (34), and the third board (30) being fastened on a second axial edge (344) of the first board (34) opposite the first axial edge (346) along the central axis (X4).

4. The connection device according to claim 3, **characterized in that** the electronic boards (30, 34, 36) are fastened by embedding members (348, 350, 368, 304) and welds ensuring the electrical connection between the boards.

5. The connection device according to one of claims 3 and 4, **characterized in that** the second (36) and third (30) electronic boards have a semicircular outer contour (364, 300) centered on the central axis (X4) and delimited by an inner wall (40) of the housing (4), and a central orifice (366, 302) extending around a central conduit (18) of the housing (4).
